**Europäisches Patentamt**

**European Patent Office**

**Office européen des brevets**

(19)

(11) Veröffentlichungsnummer: **0 140 030**

**A1**

# EUROPÄISCHE PATENTANMELDUNG

(12)

(21) Anmeldenummer: **84110409.4**

(22) Anmeldetag: **31.08.84**

(51) Int. Cl.⁴: **B 60 H 1/00**
**B 60 H 1/24**

(30) Priorität: **14.09.83 DE 3333253**

(43) Veröffentlichungstag der Anmeldung:
**08.05.85 Patentblatt 85/19**

(84) Benannte Vertragsstaaten:
**DE FR IT SE**

(71) Anmelder: **Siemens Aktiengesellschaft**
**Berlin und München Wittelsbacherplatz 2**
**D-8000 München 2(DE)**

(72) Erfinder: **Richter, Réne**
**Pommernstrasse 1**
**D-8621 Hochstadt(DE)**

(72) Erfinder: **Kusuma, Djuanarto-Adi**
**Bgm.-Prell-Strasse 17**
**D-8620 Lichtenfels(DE)**

(54) **Drehbare Luftleitdüse in Belüftungsanlagen für Kraftfahrzeuge.**

(57) Drehbare Luftleitdüse (*10*) vornehmlich in Belüftungsanlagen für Kraftfahrzeuge mit einer im Lüfterrohr (5) oder im Luftzuführungsrohr (6) angeordneten drehbar gelagerten Scheibe (1) mit abgeschrägten und in einer Richtung verlaufenden durchgehenden Stegen (11). Diese wird durch die angeströmte Luft (2) in Drehbewegung versetzt. Die Abschrägung der Stege (11) kann unterschiedlich sein. Die Scheibe (1) kann kurz vor dem Luftaustritt an dem Lüfterrohr (5) angebracht sein.

FIG 1

**EP 0 140 030 A1**

SIEMENS AKTIENGESELLSCHAFT     Unser Zeichen
Berlin und München            VPA 83 P 3 3 0 1 E


Drehbare Luftleitdüse in Belüftungsanlagen für Kraftfahrzeuge

Die Erfindung bezieht sich auf eine drehbare Luftleitdüse in Belüftunganlagen für Kraftfahrzeuge, welche in
einem Gehäuse oder im Luftzuführungsrohr mit einer
Luftaustrittsöffnung angeordnet ist, mit einem Lüfterrad
oder einer Luftleitschaufel.

Bekannte Luftleitdüsen für Belüftungsanlagen für Kraftfahrzeuge sind Gehäuse mit verstellbaren Lamellen. Die
Richtung der Luftströmung nach Einstellung der Lamellen
wird beibehalten. Dies kann zur Beeinträchtigung des
Wohlbefindens des ständig von Luft angeströmten Fahrgastes
führen.

Bekannte Belüftungsdüsen, die die Ausströmrichtung der
Luft beeinflussen, umfassen meist eine Vielzahl beweglicher Einzelteile. Derartige Belüftungsdüsen sind aufgrund der vielen Einzelteile und der dadurch bedingten
zeitintensiven Montage sehr aufwendig. Ein weiterer Nachteil der bekannten Einrichtungen ist, daß in der Regel
die eigentlichen Luftleiteinrichtungen, sofern welche
innerhalb der Düse vorhanden sind, durch die Düsenöffnungen sichtbar bleiben.

Für einen elektrischen Haartrockner ist bereits ein Pulsator mit einem frei drehbar gelagerten Rotor mit Flügeln
oder Leitflächen bekannt (DE-OS 32 25 944). Der Rotor kann
mit mehreren parallelen in derselben Richtung geneigten
Flügeln versehen sein. Unter Einwirkung des

Td 2 Gr /07.09.83

Heißluftstromes wird der Rotor in Drehung versetzt und verwandelt den normalerweise gerade aus dem Trockner austretenden Luftstrom in einen wirbelförmigen und pulsierenden.

Der Erfindung liegt deshalb die Aufgabe zugrunde, eine Luftleitdüse zu schaffen, die bei relativ geringem konstruktiven Aufwand, einfacher Montage und Bedienung eine wirkungsvolle Belüftung des Fahrgastraumes ohne gerichtetes Anströmen der Insassen ermöglicht. Die Richtung der Luft soll sich ständig ändern.

Diese Aufgabe wird erfindungsgemäß gelöst mit einer Luftleitdüse mit drehbar gelagerter Scheibe mit abgeschrägten und in einer Richtung verlaufenden durchgehenden Stegen, die durch die angeströmte Luft in Drehbewegung versetzt wird. Die Abschrägung der Stege (der Abschrägwinkel) beträgt vorzugsweise 5 - 20°. Die Abschrägung der einzelnen Stege kann unterschiedlich sein.

Die Belüftungsdüse, die einen besonders einfachen Aufbau aufweist, ist einfach als Spritzteil kostengünstig herzustellen.

Mit der in dieser Form ausgebildeten drehbar gelagerten Luftleitvorrichtung wird die Luftströmung ständig geändert.

Die Luftleitvorrichtung oder die Scheibe kann kurz vor dem Luftaustritt an dem Lüfterrohr der Luftleitdüse angebracht sein.

Die Drehbewegung der Scheibe kann durch ein Lüfterrad oder Leitschaufeln (FIG 1 bis 7), die vor der Scheibe im Gehäuse (FIG 1,2,4,5,7,9 und 10) oder im Luftzuführungsrohr (FIG 6 und 11) angebracht sind, erfolgen. Sie setzen die lineare Luftbewegung in Drall um.

Die Drehbewegung des Lüfterrades kann durch einen Elektromotor an dem das Lüfterrad angebracht ist oder durch die Fahrgeschwindigkeit des Kraftfahrzeuges und/oder mittels der Luftströmung einer in einem Gehäuse mit Elektromotor angetriebenen Lüfterrades erfolgen. Die Drehbewegung der Scheibe kann durch einen Zahnradmechanismus bewirkt werden.

Die Steuerung der Drehgeschwindigkeit der Scheibe erfolgt durch eine Bremsfeder oder eine Fliehkraftbremse. Die Bremsfeder kann durch eine Schraube oder durch einen Stift, der gleichzeitig das Lüfterrad festhält, vorgespannt sein.

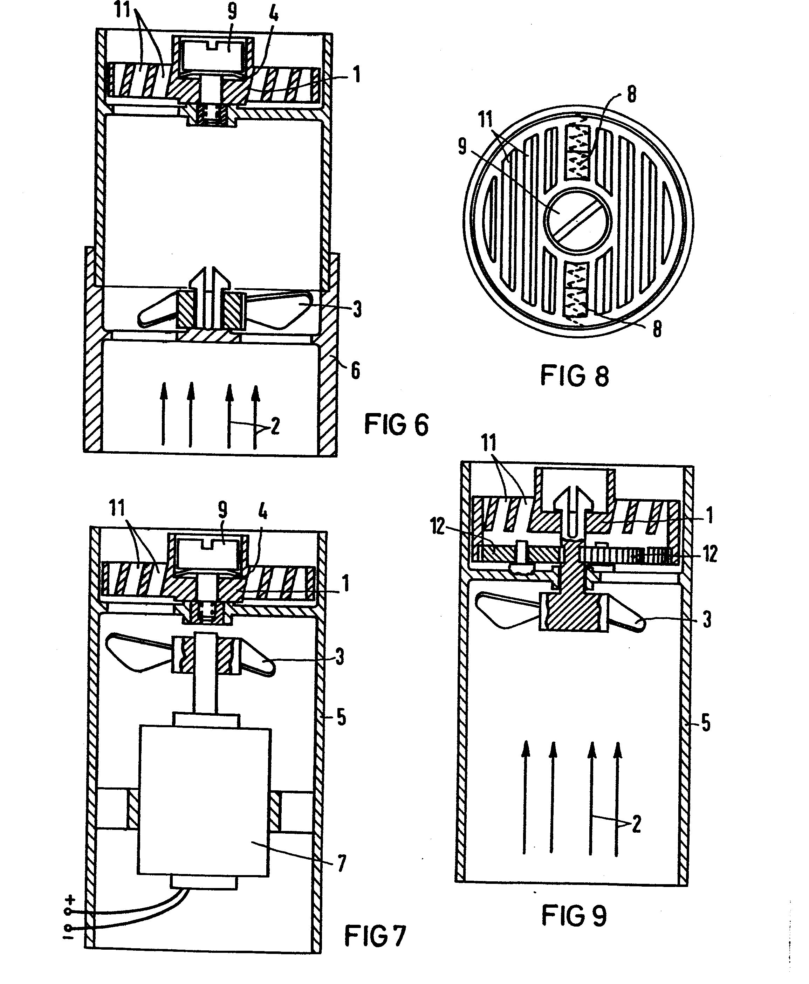

Die Beibehaltung der Luftströmungsrichtung aus der Luftleitdüse in den Kraftfahrzeugraum erfolgt durch Umspringen der Bremsfeder 4, die bei herausgezogener Scheibe eine Rastung zwischen der Scheibe und der Schraube bewirkt oder durch die Drehung eines Exzenters (FIG 5/15), der an dem Gehäuse der Luftleitdüse angebracht ist.

In der Zeichnung sind Ausführungsbeispiele der Erfindung wiedergegeben, die anhand der folgenden Beschreibung näher erläutert werden. Es zeigen:

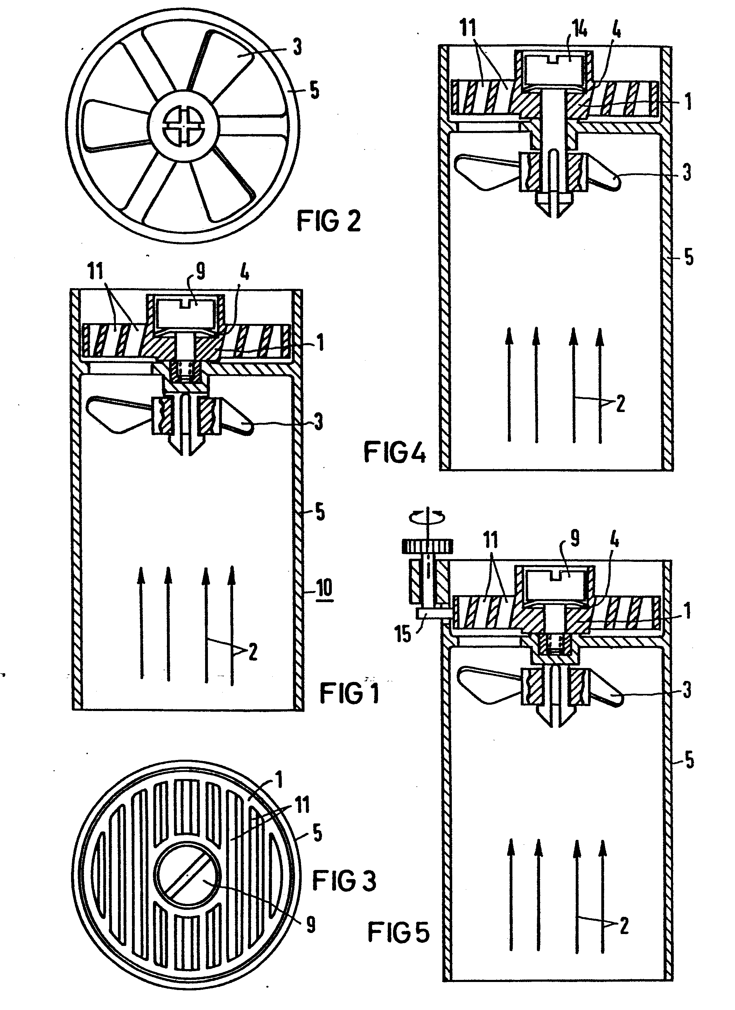

FIG 1 einen Schnitt durch eine erfindungsgemäße Luftleitdüse 10.

FIG 2 eine Draufsicht auf ein Lüfterrad 3.

FIG 3 eine Draufsicht auf eine Scheibe 1.

FIG 4 einen Schnitt durch eine Luftleitdüse mit einer mittels eines Stiftes 14 drehbaren Scheibe 1, die gleichzeitig das Lüfterrad 3 festhält.

0140030

FIG 5 einen Schnitt durch eine Luftleitdüse mit einer drehbaren Scheibe 1 mit einem Exzenter 15 mit dem die Scheibe 1 festgestellt werden kann.

FIG 6 einen Schnitt durch eine Luftleitdüse mit einer drehbaren Scheibe 1 mit einem Lüfterrad 3, das in dem Luftzuleitungsrohr 6 angebracht ist.

FIG 7 einen Schnitt durch eine Luftleitdüse mit einer drehbaren Scheibe 1, mit einem Lüfterrad 3, das mit einem Elektromotor 7 angetrieben wird.

FIG 8 eine Draufsicht auf eine Scheibe 1 mit einer Fliehkraftbremse 8.

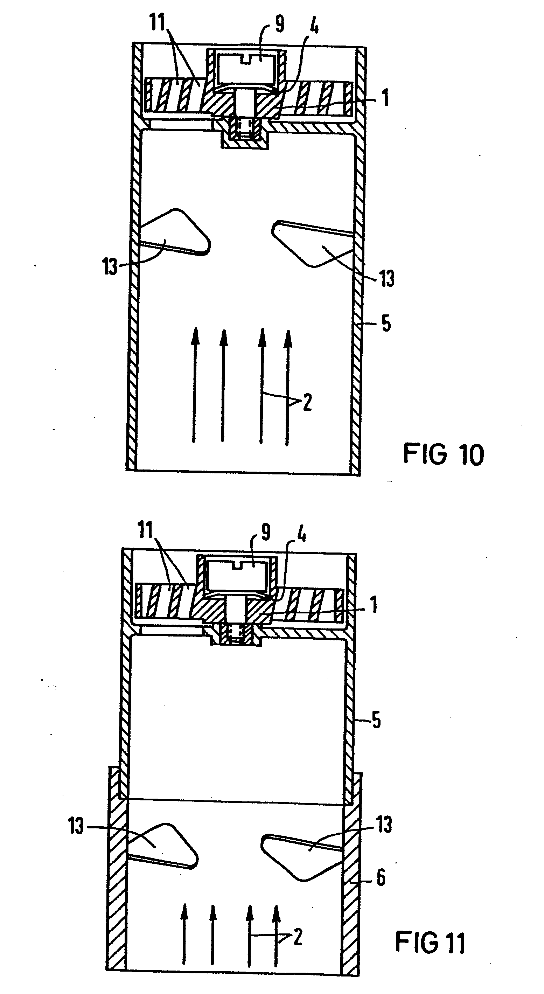

Fig 9 einen Schnitt durch eine Luftleitdüse mit einer drehbaren Scheibe 1 und dem Zahnradmechanismus 12.

FIG 10 einen Schnitt durch das Lüfterrohr 5, mit mehreren an dem Gehäuse integrierten Luftleitschaufeln 13.

FIG 11 einen Schnitt durch das Lüfterrohr 5, mit mehreren an dem Luftzuleitungsrohr 6 integrierten Luftleitschaufeln 13.

Gemäß den Figuren 1, 4, 5 und 9 ist das die Drehbewegung erzeugende Lüfterrad 3 vor der Scheibe 1 im Lüfterrohr 5 angeordnet und gemäß FIG 6 im Luftzuführungsrohr 6.

FIG 7 zeigt eine Ausführung mit einem Elektromotor am Lüfterrad 3.

Die Figuren 10 und 11 zeigen Ausführungen mit einer Leitschaufel 13 im Lüfterrohr 5 bzw. im Luftzuführungsrohr 6.

Aus FIG 9 ist auch der Zahnradmechanismus 12 ersichtlich, der eine Drehbewegung der Scheibe 1 erzeugt.

Für die Steuerung der Drehgeschwindigkeit der Scheibe ist eine Fliehkraftbremse 8 oder eine Bremsfeder 4 vorgesehen. Sie kann durch eine Schraube 9 (FIG 5) oder durch einen Stift 14 (FIG 4) vorgespannt werden. FIG 2 zeigt jeweils die lineare Luftströmung an und 11 die Stege.

5 Patentansprüche
11 Figuren

0140030

## Patentansprüche

1. Drehbare Luftleitdüse in Belüftungsanlagen für Kraftfahrzeuge, welche in einem Gehäuse oder im Luftzuführungsrohr mit einer Luftaustrittsöffnung angeordnet ist, mit einem Lüfterrad oder einer Luftleitschaufel, g e k e n n - z e i c h n e t durch eine Luftleitdüse (10) mit drehbar gelagerter Scheibe (1) mit abgeschrägten und in einer Richtung verlaufenden durchgehenden Stegen (11), die durch die angeströmte Luft (2) in Bewegung versetzt wird.

2. Drehbare Luftleitdüse nach Anspruch 1, d a d u r c h g e k e n n z e i c h n e t , daß die Abschrägung der Stege (der Abschrägwinkel) 5 - 20° beträgt.

3. Drehbare Luftleitdüse nach Anspruch 1 und 2, d a - d u r c h g e k e n n z e i c h n e t , daß die Abschrägung der Stege unterschiedlich ist.

4. Drehbare Luftleitdüse nach Anspruch 1 bis 3, d a - d u r c h g e k e n n z e i c h n e t , daß die Scheibe (1) kurz vor dem Luftaustritt an dem Lüfterrohr (5) angeordnet ist.

5. Drehbare Luftleitdüse nach Anspruch 1 bis 4, d a - d u r c h g e k e n n z e i c h n e t , daß die Scheibe (1) durch eine Bremsfeder (4) oder eine Fliehkraftbremse (8) gesteuert ist.

0140030

83 P 3301

FIG 2

FIG4

FIG 1

FIG 3

FIG 5

0140030
83 P 3301

FIG 6

FIG 8

FIG 7

FIG 9

0140030

83 P 3301

FIG 10

FIG 11

## EUROPÄISCHER RECHERCHENBERICHT

Europäisches Patentamt

EP 84 11 0409

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 824 429 (A.S. ZUCKER) <br><br> * Insgesamt * <br><br> --- | 1,2,4 5 | B 60 H 1/00 <br> B 60 H 1/24 |
| X | US-A-2 134 649 (C.H. WILL) <br> * Insgesamt * <br><br> --- | 1,2,4 | |
| Y,D | FR-A-2 509 150 (SUNBEAM CORPORATION) <br> * Patentansprüche; Figuren * <br><br> --- | 1-5 | |
| Y | DE-B-1 054 860 (SÜDDEUTSCHE KÜHLERFABRIK) <br> * Insgesamt * <br><br> --- | 3 | |
| A | US-A-3 333 522 (P.D. FADOW) <br> * Insgesamt * <br><br> ----- | 1,2 | RECHERCHIERTE SACHGEBIETE (Int. Cl.4) <br><br> B 60 H |

Der vorliegende Recherchenbericht wurde für alle Patentansprüche erstellt.

| Recherchenort <br> DEN HAAG | Abschlußdatum der Recherche <br> 18-12-1984 | Prüfer <br> FRANKS B.G. |
|---|---|---|